# EUROPEAN PATENT APPLICATION

(11) **EP 4 661 508 A1**
(43) Date of publication of application: **10.12.2025**
(21) Application number: 23919039.0
(22) Date of filing: 01.02.2023
(51) Int. Cl.: H04W 52/02, H04W 24/10

(54) **RADIO RESOURCE MANAGEMENT (RRM) MEASUREMENT METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: HU, Ziquan, Beijing 100085 (CN); LI, Yanhua, Beijing 100085 (CN)
(74) Representative: Dehns Germany Partnerschaft mbB
(86) International application number: PCT/CN2023/074155
(87) International publication number: WO 2024/159461

(57) **Abstract**

Embodiments of the present disclosure provide an RRM measurement method and apparatus, a communication device, and a storage medium. The RRM measurement method executed by a UE may comprise: in response to a target extended discontinuous reception (eDRX) period being greater than or equal to a preset value, performing RRM measurement within a target paging time window (PTW).

## Description

### TECHNICAL FIELD

The present disclosure relates to the technical field of wireless communication but is not limited thereto, and in particular, to a radio resource management (RRM) measurement method and apparatus, a communication device, and a storage medium.

### BACKGROUND

In order to balance low power consumption and services with certain latency requirements, the terminal, also known as a user equipment (UE), introduces an extended discontinuous reception (eDRX) mechanism. After the terminal enters the eDRX mechanism, the terminal will wake up and sleep during the eDRX cycle.

If the eDRX cycle is long enough, there is a paging time window (PTW) in each eDRX cycle. The terminal wakes up and sleeps according to the discontinuous reception (DRX) cycle within the PTW, and monitors the paging channel when waking up to receive downlink data. The terminal is in a sleep mode for the rest of the time. If the eDRX cycle is short, the eDRX cycle is not configured with the PTW, and the network device may consider that the terminal does not sleep, that is, the terminal is always accessible.

### SUMMARY

Embodiments of the present disclosure provide an RRM measurement method and apparatus, a communication device, and a storage medium.

A first aspect of the embodiments of the present disclosure provides a radio resource management (RRM) measurement method, which is performed by a UE and includes:
in response to a target eDRX cycle being longer than or equal to a preset value, performing RRM measurement within a target paging time window (PTW). A second aspect of the embodiments of the present disclosure provides a radio resource management RRM measurement apparatus, where the apparatus includes:
an execution module, configured to perform RRM measurement within a target paging time window (PTW) in response to a target eDRX cycle being longer than or equal to a preset value.

A third aspect of the embodiments of the present disclosure provides a communication device, including a processor, a transceiver, a memory, and an executable program stored in the memory and executable by the processor, where the processor, when running the executable program, performs the RRM measurement method according to any technical solution of the first aspect.

A fourth aspect of the embodiments of the present disclosure provides a computer storage medium, where the computer storage medium stores an executable program; and the executable program, when executed by a processor, can implement the RRM measurement method according to any technical solution of the first aspect.

The technical solution provided by the embodiments of the present disclosure first limits the RRM measurement that would be performed in the entire time domain to be performed within the target PTW, which reduces the RRM measurement during at least some time periods, thereby saving the power consumption of the UE caused by the RRM measurement.

Secondly, when the UE performs periodic waking and sleeping according to the target eDRX cycle, since the duration of the target eDRX cycle is relatively long, the UE may switch between a wake-up state and a sleep state according to the DRX cycle within the PTW corresponding to the executed target eDRX cycle, and does not wake up during the target eDRX cycle outside the PTW. If the RRM measurement is set outside the target PTW, the UE will need to exit the sleep state in the time domain outside the target PTW due to the RRM measurement, which may make the purpose of saving power by the eDRX mechanism unable to be achieved or the effect unsatisfactory. Therefore, in the embodiments of the present disclosure, the RRM measurement is set within the PTW, that is, the UE needs to perform the RRM measurement within the target PTW where it needs to wake up based on the eDRX mechanism, thereby saving the power consumption of the UE and ensuring the effect of executing the eDRX mechanism.

It should be understood that the foregoing general description and the following detailed description are exemplary and explanatory only and are not intended to limit the embodiments of the present disclosure.

### BRIEF DESCRIPTION OF THE DRAWINGS

The accompanying drawings herein are incorporated into and constitute a part of the description, illustrate embodiments consistent with the present disclosure, and are used together with the description to explain the principles of the embodiments of the present disclosure.
FIG. 1A is a schematic structural diagram of a wireless communication system shown according to an exemplary embodiment;
FIG. 1B is a schematic diagram of a relationship among an eDRX cycle, a DRX cycle and a PTW shown according to an exemplary embodiment;
FIG. 1C is a schematic diagram of a configuration of an eDRX parameter of a UE shown according to an exemplary embodiment;
FIG. 2A is a schematic flow chart of an RRM measurement method shown according to an exemplary embodiment;
FIG. 2B is a schematic flow chart of an RRM measurement method shown according to an exemplary embodiment;
FIG. 2C is a schematic flow chart of an RRM measurement method shown according to an exemplary embodiment;
FIG. 2D is a schematic diagram of a first PTW, a second PTW and a target PTW shown according to an exemplary embodiment;
FIG. 2E is a schematic flow chart of an RRM measurement method shown according to an exemplary embodiment;
FIG. 3 is a schematic structural diagram of an RRM measurement apparatus shown according to an exemplary embodiment; and
FIG. 4 is a schematic structural diagram of a UE shown according to an exemplary embodiment.

### DETAILED DESCRIPTION

Exemplary embodiments will be described in detail herein, examples of which are represented in the accompanying drawings. When the following description relates to the drawings, the same numerals in different accompanying drawings represent the same or similar elements unless otherwise indicated. The implementations described in the following exemplary embodiments do not represent all implementations consistent with the embodiments of the present disclosure. To the contrary, they are merely examples of apparatuses and methods that are consistent with some aspects of the embodiments of the present disclosure.

Terms used in the embodiments of the present disclosure are used solely for the purpose of describing certain embodiments and are not intended to limit the embodiments of the present disclosure. The singular forms of "a/an", "said" and "the" used in the embodiments of the present disclosure are also intended to include plural forms unless the context clearly indicates other meanings. It should also be understood that the term "and/or" used herein refers to and includes any or all possible combinations of one or more associated listed items.

It should be understood that although the terms first, second, third, etc. may be used to describe various information in the embodiments of the present disclosure, and such information should not be limited to these terms. These terms are only used to distinguish the same type of information from each other. For example, without departing from the scope of the embodiments of the present disclosure, the first information may also be referred to as the second information, and similarly, the second information may also be referred to as the first information. Depending on the context, the word as used herein may be interpreted as "when..." or "while..." or "in response to determination".

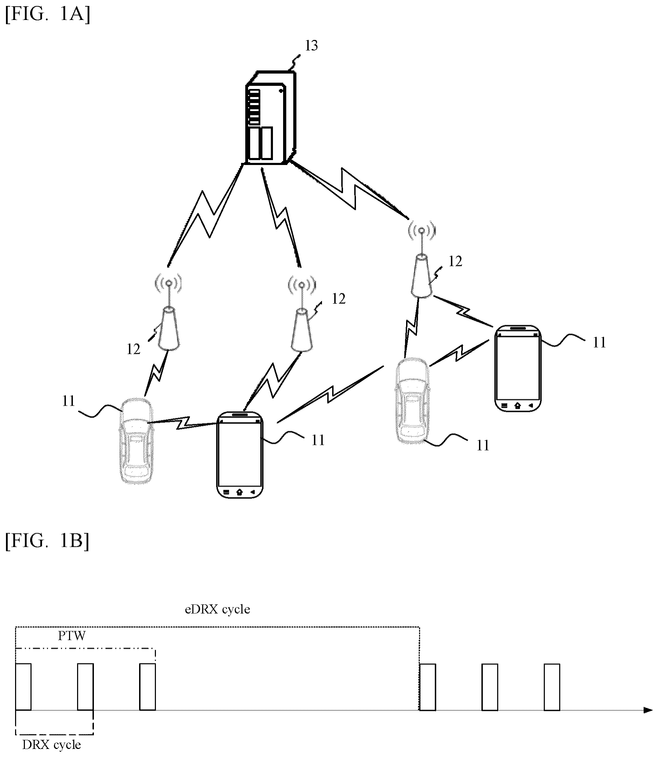

Referring to FIG. 1A, a schematic structural diagram of a wireless communication system provided by an embodiment of the present disclosure is illustrated. As shown in FIG. 1A, the wireless communication system is a communication system based on cellular mobile communication technology, and the wireless communication system may include: a number of UEs 11 and a number of access devices 12. In some embodiments, the communication system may also include: one or more core network devices, which are not shown in FIG. 1A. The core network device includes but is not limited to, an access management function (AMF), a user plane function (UPF), a session management function (SMF), and a policy control function (PCF), etc.

The UE 11 may refer to a device that provides voice and/or data connectivity to a user. The UE 11 may communicate with one or more core networks via a radio access network (RAN). The UE 11 may be an Internet of Things (IoT) UE, such as a sensor device, a mobile phone (or a cellular phone), or a computer with an IoT UE. For example, it may be a fixed, portable, pocket-sized, handheld, computer-built-in, or vehicle-mounted device. For example, a station (STA), a subscriber unit, a subscriber station, a mobile station, a mobile, a remote station, an access point, a remote terminal, an access terminal, a user terminal, a user agent, a user device, or a user equipment (UE). Alternatively, the UE 11 may also be a device of an unmanned aerial vehicle. Alternatively, the UE 11 may also be a vehicle-mounted device, such as a driving computer with a wireless communication function, or a wireless communication device connected to an external driving computer. Alternatively, the UE 11 may also be a roadside device, for example, a street lamp, a signal lamp, or other roadside device with a wireless communication function.

The access device 12 may be a network side device in a wireless communication system. The wireless communication system may be a 4th mobile communication technology (4G) system, also known as a long term evolution (LTE) system; or, the wireless communication system may be a 5G system, also known as a new radio (NR) system or a 5G NR system. Alternatively, the wireless communication system may be a next generation system of the 5G system. The access network in the 5G system may be referred to as a new generation-radio access network (NG-RAN). Alternatively, it may be an MTC system.

The access device 12 may be an evolved access device (eNB) used in a 4G system. Alternatively, the access device 12 may also be an access device (gNB) using a centralized and distributed architecture in a 5G system. When the access device 12 uses the centralized and distributed architecture, it usually includes a central unit (CU) and at least two distributed units (DUs). The central unit is provided with protocol stacks of a packet data convergence protocol (PDCP) layer, a radio link layer control protocol (Radio Link Control, RLC) layer, and a media access control (MAC) layer, and the distributed unit is provided with a protocol stack of a physical (PHY) layer. The specific implementation manner of the access device 12 is not limited by the embodiments of the present disclosure.

A wireless connection may be established between the access device 12 and the UE 11 through a wireless air interface. In different implementations, the wireless air interface is a wireless air interface based on the fourth generation mobile communication network technology (4G) standard; or, the wireless air interface is a wireless air interface based on the fifth generation mobile communication network technology (5G) standard, for example, the wireless air interface is a new air interface; or, the wireless air interface may also be a wireless air interface based on the next generation mobile communication network technology standard of 5G.

In the related art, the eDRX parameters of the terminal in the idle state are negotiated between the terminal and the core network through NAS messages, which are completely transparent to access devices such as base stations.

In New Radio (NR), the inactive state is introduced. In this case, the UE needs to receive not only core network paging but also RAN paging. In the case of a reduced capability (Redcap) terminal, eDRX is also introduced for the inactive state, and the eDRX parameters of the inactive state are configured by the RAN. Furthermore, the eDRX cycle for the inactive state and the eDRX cycle for the idle state may be different. For example, the eDRX cycle in the inactive state is shorter than the eDRX cycle in the idle state. The length of the PTW for the inactive state is also configured by the RAN. In one example, the PTW in the inactive state configured by the RAN has the same starting point as the PTW in the idle state, but the length may be different.

Referring to FIG. 1B, it can be seen that the eDRX cycle includes a PTW. For example, one eDRX cycle includes one PTW. One PTW includes one or more DRX cycles. The duration of the DRX cycle is less than the duration of the eDRX cycle.

For example, when the eDRX cycle is longer than 10.24s, the PTW of the eDRX cycle includes multiple DRXs.

Before the terminal enters the eDRX mechanism, the terminal may perform relevant signaling interactions with the network side.

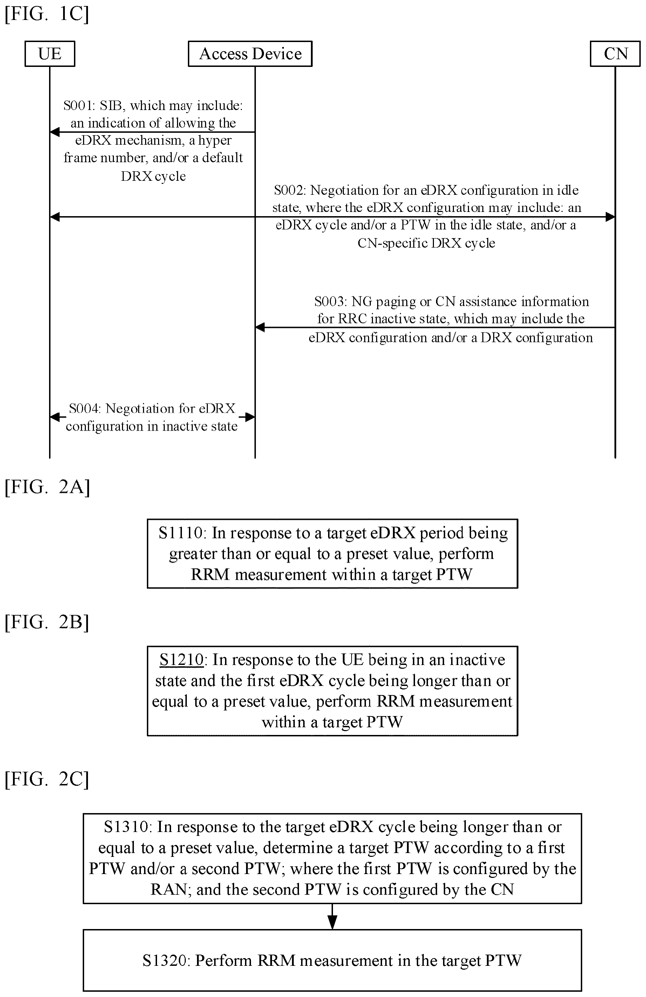

For example, as shown in FIG. 1C, the terminal may perform relevant signaling interaction with the network side, which may include the following steps.

In S001, the access device sends a system information block (SIB) to the UE, and the SIB includes an indication of allowing the eDRX mechanism, a default DRX cycle, and a hyper frame number (hyper system frame number, SFN). After the UE receives the SIB, if the SIB includes an indication to the UE that the eDRX mechanism is allowed, the UE may determine the hyper frame to start executing the eDRX mechanism according to the hyper frame number. When executing the eDRX mechanism, the UE may monitor CN paging according to the default DRX cycle, according to the negotiation agreement between the UE and the access device. The access device may be various types of access devices, as shown in FIG. 1A.

In some cases, the SIB may further include a default DRX cycle. The default DRX cycle may also be referred to as a default paging cycle.

In S002, the UE and the core network (CN) negotiate an eDRX configuration in an idle state, which may include eDRX parameters in the idle state. Specifically, the UE sends UE-specific DRX parameters (UE-specific DRX) and/or preferred DRX parameters (preferably eDRX) when sending an attach request or a tracking area update (TAU) request to the MME.

After receiving the above-mentioned attach request or TAU request, the CN sends an eDRX configuration to the UE; the eDRX configuration carries the above-mentioned one or more eDRX parameters. The eDRX parameters include one or more of the following: an eDRX cycle, and/or a time domain starting position and a window length of a PTW.

In S003, after the eDRX configuration in the idle state is completed and the terminal enters the eDRX mechanism, the CN may send a NG paging signaling and CN assistance information for the RRC inactive state to the access network. The NG paging signaling, CN assistance information for the RRC inactive state may include: eDRX configuration and/or DRX configuration. The DRX configuration may include the DRX cycle configured by the CN. The CN performs paging according to the eDRX configuration. After receiving the core network (CN) paging sent by the MME, the access device forwards the CN paging to the UE.

The eDRX parameters in the idle state are transparently transmitted to the UE through the access device. For example, the mobile management entity (MME) of the CN or the core network device, such as AMF, sends the eDRX parameters of the eDRX mechanism to the UE through the access device. In some embodiments, the MME may be replaced by the functional network element of the CN, such as AMF. The eDRX parameters for the idle state are negotiated between the UE and the core network through NAS messages, which are completely transparent to the access device.

In S004, the UE and the access device negotiate an eDRX configuration in an inactive state, where the eDRX configuration in the inactive state may include eDRX parameters in the inactive state. Specifically, the access device and the terminal negotiate the eDRX configuration in the inactive state directly through one or more RRC signaling.

If the terminal is in the inactive state, the UE not only needs to receive paging from the core network but also needs to receive RAN paging. The eDRX parameters in the inactive state may include: an eDRX cycle in the inactive state and/or the time domain start position and/or window length (i.e., time length) of the PTW in the inactive state.

The eDRX may also be introduced for the inactive state, and the eDRX parameters in the inactive state are configured by the RAN, and the eDRX cycle in the inactive state and the eDRX cycle in the idle state are likely to be different.

For example, the eDRX cycle in the inactive state is shorter than the eDRX cycle in the idle state; and the length of the PTW in the inactive state is also configured by the RAN, and the PTW configured by the RAN and the PTW in the idle state have the same starting point, but may have different lengths.

In some cases, when the eDRX cycle is long enough, a PTW is set within the eDRX cycle, and the terminal periodically switches between the wake-up state and the sleep state according to the DRX cycle within the PTW.

It is worth noting that any two of the following three processes, namely, the negotiation between the UE and the access device for the eDRX configuration in the inactive state, the negotiation between the UE and the CN for the eDRX configuration in the idle state, and the access device sending the indication of allowing the eDRX mechanism through the SIB, the default DRX cycle and the hyper frame number (hyper system frame number, SFN), may be independent of each other or performed in a single process. For example, in the single process, the network-side devices such as the CN and/or the access device and the UE may perform S001, S002 to S003 separately, or perform S004 separately. In other embodiments, the network-side devices such as the CN and/or the access device may perform S001 to S004 simultaneously.

In the related art, the eDRX cycle configured for the UE in the inactive state is generally relatively short, which facilitates the core network (CN) to page the UE in time when data arrives, thereby improving the accessibility of the UE. However, considering the further power saving of the UE, the eDRX cycle is further increased. The radio resource management (RRM) measurement of the UE adapted to it also has the same power saving requirements.

As shown in FIG. 2A, an embodiment of the present disclosure provides a radio resource management (RRM) measurement method, which is performed by a UE and includes the following step.

In S 1110, in response to the target eDRX cycle being longer than or equal to a preset value, RRM measurement is performed within a target PTW.

The UE may be any UE supporting the eDRX mechanism.

For example, the UE may be various mobile phones, tablet computers, wearable devices, smart home devices, smart office devices, vehicle-mounted devices, or industrial equipment, etc.

As another example, the UE may be a Reduced Capability (RedCap) UE or the like.

Here, the UE may be in a non-connected state, and the non-connected state may include the RRC inactive state and the RRC idle state. The RRC inactive state may also be referred to as the inactive state for short. If the UE supports the eDRX mechanism in the inactive state, the eDRX parameters of the UE in the inactive state are configured by the radio access network (RAN). Specifically, it is configured or determined by access devices such as evolved base stations (eNBs) and/or next-generation base stations (gNBs). The first eDRX parameter may be used to configure the eDRX cycle (i.e., the first eDRX cycle). Optionally, the RAN may also configure the DRX cycle (i.e., the first DRX cycle).

If the UE supports the eDRX mechanism in an idle state (also called an RRC idle state), the UE may receive the eDRX parameters configured by the CN. In the embodiment of the present disclosure,

The configured eDRX parameters are called second eDRX parameters, and the second eDRX parameters may be used to configure the eDRX cycle (i.e., the second eDRX cycle). The CN may also configure the DRX cycle (i.e., the second DRX cycle).

The aforementioned target eDRX cycle may be: the first eDRX cycle and/or the second eDRX cycle.

For example, if the UE is in the inactive state, the target eDRX cycle may be the first eDRX cycle and/or the second eDRX cycle.

For example, if the UE is in the idle state, the target eDRX cycle may be the second eDRX cycle.

The preset value here may be a value that allows the presence of a PTW within the target eDRX cycle. In other words, when the target eDRX cycle is longer than or equal to the preset value, it is necessary to configure the PTW in the target eDRX cycle. Thus, when the target eDRX cycle is longer than or equal to 20.48s, the target eDRX cycle may have the PTW.

S 1110 may include at least one of the following.

If the UE is in the inactive state and the first eDRX cycle in the inactive state is longer than or equal to a preset value, the UE performs the RRM measurement within the target PTW.

If the UE is in the inactive state and the second eDRX cycle in the idle state is longer than or equal to a preset value, the UE performs the RRM measurement within the target PTW.

If the UE is in the idle state and the second eDRX cycle in the idle state is longer than or equal to a preset value, the UE performs the RRM measurement within the target PTW.

In some other embodiments, the target PTW may be a PTW determined according to the first eDRX parameter and/or the second eDRX parameter. For example, if the UE is configured with the first eDRX parameter, the target PTW may be a first PTW determined by the first eDRX parameter.

As another example, if the UE is configured with the second eDRX parameter but not with the first eDRX parameter, the target PTW may be a second PTW indicated by the second eDRX parameter.

As another example, if the UE is configured with the first eDRX parameter and the second eDRX parameter, the target PTW may be determined with reference to both the first eDRX parameter and the second eDRX parameter.

In summary, in the embodiments of the present disclosure, the target PTW is a portion of time domain resources in the time domain, which is usually a periodically distributed time window with equal or unequal length.

The RRM measurement here may be divided into: the RRM measurement of the serving cell and/or the RRM measurement of the neighboring cell. The neighboring cell may include one or more of the following: an intra-frequency neighboring cell, an inter-frequency neighboring cell, an inter-system neighboring cell, etc.

The RRM measurements for the serving cell may include: measurement of the reference signal of the serving cell and cell evaluation based on the measurement data. The RRM measurements for neighboring cells may include: cell identification (or discovery), measurement of the reference signal of the neighboring cell, and cell evaluation based on the measurement value. The measurement data may be obtained by measuring the reference signal.

Neighboring cells include, but are not limited to, intra-frequency neighboring cells, inter-frequency neighboring cells, and/or inter-system neighboring cells.

The RRM measurement-related cycle may include:
a detection cycle (Tdetect), used to identify and evaluate neighboring cells;
a measurement cycle (Tmeasure), used for measuring the serving cell or the neighboring cell; and
an evaluation cycle (Tevaluate), used to perform cell evaluation based on the measurement data obtained in the measurement cycle.

During the measurement cycle, the UE may measure the reference signal (synchronization signal and PBCH block, SSB) of the serving cell and/or the reference signal of the neighboring cell to obtain measurement data.

The reference signal includes, but is not limited to:
a synchronization signal and PBCH block (SSB), PBCH is the abbreviation of Physical Broadcast Channel; and
a channel state information reference signal (CSI-RS).

The measurement data may include but is not limited to:
a value of a measured signal; and
a comparison result between the value of the measured signal and the corresponding threshold value.

The value of measured signal includes but is not limited to a reference signal received power (RSRP) or a reference signal received quality (RSRQ).

First, the RRM measurement that would be performed in the entire time domain is limited to be performed within the target PTW, thereby reducing the RRM measurement in at least a part of the time period, thereby saving the power consumption of the UE caused by the RRM measurement.

Secondly, when the UE is periodically awakened and asleep according to the target eDRX cycle, since the duration of the target eDRX cycle is relatively long, the UE may switch between the wake-up state and the sleep state according to the DRX cycle within the PTW corresponding to the executed target eDRX cycle, and does not wake up in the target eDRX cycle outside the PTW. If the RRM measurement is set outside the target PTW, the UE will need to exit the sleep state outside the target PTW in the time domain due to the RRM measurement, which may make the purpose of saving power of the eDRX mechanism unable to be achieved or the effect unsatisfactory. Therefore, in the embodiments of the present disclosure, the RRM measurement is set within the PTW, that is, the UE needs to perform RRM measurement within the target PTW where it needs to wake up based on the eDRX mechanism, thereby saving the power consumption of the UE and ensuring the effect of executing the eDRX mechanism. In some embodiments, the target eDRX cycle includes: the first eDRX cycle configured by the access network (RAN), and/or the second eDRX cycle when the UE is in the idle state.

As shown in FIG. 2B, an embodiment of the present disclosure provides an RRM measurement method, which is performed by a UE, and the method includes the following steps.

In S1210, in response to the UE being in an inactive state and the first eDRX cycle being longer than or equal to a preset value, RRM measurement is performed within a target PTW.

When the UE is in the inactive state, the target eDRX cycle may be the first eDRX cycle configured by the RAN. The first eDRX cycle may be the eDRX cycle corresponding to the inactive state, that is, the eDRX cycle in the inactive state is longer than or equal to the preset value, and the RRM measurement is performed in the target PTW.

The target PTW may be the first PTW corresponding to the first eDRX cycle, the second PTW in the idle state, or other PTWs.

If the target eDRX cycle is the first eDRX cycle, the target PTW may be determined according to the first eDRX parameter configured by the RAN. The window parameter may include: the duration of the target PTW, the distribution cycle of the target PTW, and/or different window lengths of the PTW at different time domain positions.

Similarly, for a UE in an inactive state, first, the RRM measurement that would be performed in the entire time domain is limited to be performed in the target PTW, thereby reducing the RRM measurement in at least part of the time period, and thus saving the power consumption of the UE due to the RRM measurement. Secondly, since the UE does not wake up outside the first PTW during the first eDRX cycle when it is periodically awakened and dormant according to the first PTW of the first eDRX cycle, the UE needs to exit the sleep state due to RRM measurement outside the first PTW in the time domain, which may make the purpose of saving power consumption of the inactive eDRX mechanism unable to be achieved, or the effect is not ideal. In the embodiment of the present disclosure, the target PTW is associated with the first PTW, for example, this association relationship is reflected in at least partial overlap in the time domain, etc. Therefore, in the embodiment of the present disclosure, the RRM measurement is set in the target PTW associated with the first PTW, that is, the UE needs to perform RRM measurement in the time period when it needs to wake up based on the eDRX mechanism, thereby saving the power consumption of the UE and ensuring the execution effect of the eDRX mechanism.

As shown in FIG. 2C, an embodiment of the present disclosure provides an RRM measurement method, which is performed by a UE. The method includes the following steps.

In S1310, in response to the target eDRX cycle being longer than or equal to a preset value, a target PTW is determined according to a first PTW and/or a second PTW, where the first PTW is configured by the RAN, and the second PTW is configured by the CN.

In S1320, RRM measurement is performed in the target PTW.

For example, the first PTW is configured by the RAN through a first eDRX parameter; and the second PTW is configured by the CN through a second eDRX parameter.

In the embodiments of the present disclosure, if the UE is configured with the first PTW and the second PTW at the same time, the target PTW may be determined based on the first PTW alone, the second PTW alone, or both the first PTW and the second PTW.

The RRM measurement is performed within the target PTW rather than over the entire time domain.

In some embodiments, determining the target PTW according to the first PTW configured by the RAN and/or the second PTW configured by the CN includes at least one of the following:
determining that the target PTW is the second PTW;
determining, according to the first PTW and the second PTW, that the target PTW is a third PTW, where a cycle of the third PTW is the same as a cycle of the first PTW, and a window length of the third PTW is the same as a window length of the second PTW; and
determining, according to the first PTW and the second PTW, that the target PTW is the second PTW and the first PTW which does not overlap with the second PTW.

In one embodiment, the first PTW is determined as the target PTW, which is equivalent to performing RRM measurement within the PTW in the inactive state. In this case, both the distribution cycle and window length of the target PTW in the time domain are determined by the first eDRX parameter.

In another embodiment, the second PTW is determined as the target PTW, so that when the UE is in the inactive state or the idle state, RRM measurement is only performed in the second PTW. Due to the association relationship between the first eDRX parameter and the second eDRX parameter, the first eDRX cycle will be shorter than or equal to the second eDRX cycle, and the first PTW will be shorter than or equal to the second PTW. In this case, if any first PTW and second PTW overlap in the time domain, the time domain starting position of the first PTW must be aligned with the second PTW that overlaps with it. Therefore, when the UE is in the inactive state and only performs RRM measurements in the second PTW, compared with performing RRM measurements in the first PTW, the time domain length of the RRM measurement can be further reduced, thereby further saving the power consumption of the UE.

In other embodiments, the target PTW is determined with reference to a combination of the first PTW and the second PTW. For example, the distribution cycle of the target PTW in the time domain is determined according to the distribution cycle of the first PTW defined by the first eDRX parameter, and the window length (that is, the time length) of each target PTW is determined according to the window length of the second PTW defined by the second eDRX parameter. In addition, the distribution cycle of the target PTW in the time domain may also be determined according to the second eDRX parameter, and the window length of the target PTW may be determined according to the first eDRX parameter.

If the distribution cycle of the target PTW in the time domain is determined according to the first eDRX parameter, the target PTW occurrence cycle is the same as the first eDRX cycle and the first PTW. If the window length of the target PTW is determined according to the second eDRX parameter, the window length of the target PTW is equal to the window length of the second PTW.

If the target PTW is determined to be the second PTW and the first PTW that does not overlap with the second PTW based on the first PTW and the second PTW, then the target PTW in this case may include all the second PTWs and part of the first PTWs. Part of the first PTWs included in the target PTW are the first PTWs that do not have an overlapping relationship in the time domain with the second PTWs. For example, if the first eDRX cycle is equal to 1/2 of the second eDRX cycle, the target PTW may include: an odd number of first PTWs and all second PTWs. In short, in this case, the target PTW has two PTWs with different durations.

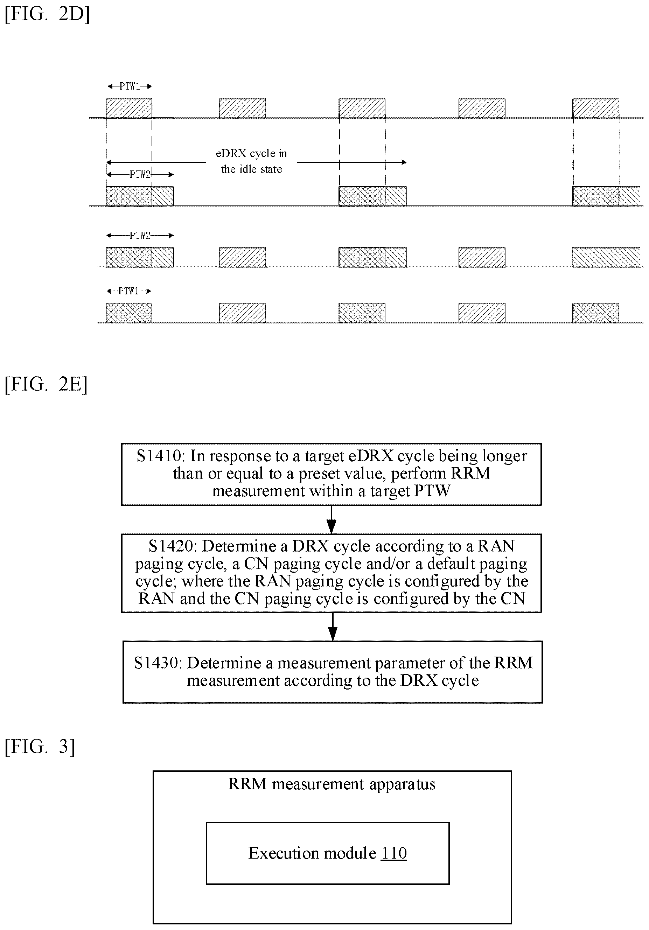

As shown in FIG. 2D, PTW1s are PTWs in the inactive state, i.e., the first PTWs. PTW2s are PTWs in the idle state, i.e., the second PTWs. The first line of FIG. 2D shows the distribution of PTW1s in the time domain; the second line of FIG. 2D shows the distribution of PTW2s in the time domain and the overlapping relationship between PTW1s and PTW2s.

It can be seen that PTW2 in the idle state eDRX cycle is also longer than PTW1. In this way, PTW1s are divided into two categories: one is PTW1 that overlaps with PTW2, and the other is PTW1 that does not overlap with PTW2.

The third line of FIG. 2D may be an example of the target PTW, that is, the target PTW may include all PTW2s and PTW1s that do not overlap with PTW2s.

The fourth line of FIG. 2D may be an example of the target PTW, that is, the target PTW is PTW1.

As shown in FIG. 2E, an embodiment of the present disclosure provides a radio resource management (RRM) measurement method, which is performed by a UE and includes the following steps.

In S1410, in response to the target eDRX cycle being longer than or equal to a preset value, the RRM measurement is performed within the target PTW.

In S1420, a DRX cycle is determined according to a RAN paging cycle, a CN paging cycle and/or a default paging cycle; where the RAN paging cycle is configured by the RAN and the CN paging cycle is configured by the CN.

In S1430, a measurement parameter is determined for RRM measurement according to the DRX cycle.

The RAN paging cycle is configured by the RAN, for example, the RAN sends the RAN paging cycle to the UE via the RRC signaling. The UE monitors the RAN paging according to the RAN paging cycle in the first PTW.

The CN paging cycle may be configured by the CN. After receiving the CN paging cycle, the UE may monitor the CN paging according to the CN paging cycle within the second PTW.

The default paging cycle may be a paging cycle broadcasted by a system message of the RAN, and the paging cycle may be used to monitor CN paging and/or RAN paging.

In the embodiments of the present disclosure, the DRX cycle is determined according to a RAN paging cycle, a CN paging cycle and/or a default paging cycle, and the DRX cycle may be used to determine measurement parameters for the RRM measurement, for example, to at least determine a cycle related to RRM measurement. The cycle related to RRM measurement may include a detection cycle, a measurement cycle and/or an evaluation cycle.

That is, in the embodiments of the present disclosure, the DRX cycle is first determined, and then the measurement parameters for performing the RRM measurement in the target PTW are determined according to the DRX cycle.

It is worth noting that this embodiment can be implemented independently or in combination with the aforementioned embodiments, for example, in combination with the RRM measurement method shown in FIG. 2C. That is, the target PTW is determined according to the method shown in FIG. 2C, and the measurement parameters of the RRM measurement are determined according to the method shown in FIG. 2E.

In some embodiments, determining the DRX cycle according to the RAN paging cycle, the CN paging cycle and/or the default paging cycle includes:
when performing the RRM measurement within the target PTW, determining the DRX cycle according to the first PTW and the second PTW, and the RAN paging cycle, the CN paging cycle and/or the default paging cycle.

In the embodiment of the present disclosure, the measurement parameter may be determined based on whether the current target PTW corresponds to the first PTW and the second PTW at the same time. If so, the measurement parameters of the RRM measurement within different time ranges within the target PTW may be determined based on the overlapping relationship between the first PTW and the second PTW in the time domain, and further, with reference to the RAN paging cycle, the CN paging cycle and/or the default paging cycle.

In some embodiments, when performing the RRM measurement in the target PTW, determining the DRX cycle according to the first PTW and the second PTW, and the RAN paging cycle, the CN paging cycle and/or the default paging cycle includes at least one of the following:
for RRM measurement within the first PTW non-overlapping in a time domain with the second PTW, determining the DRX cycle according to the RAN paging cycle and the default paging cycle;
for RRM measurement within the first PTW overlapping in the time domain with the second PTW, determining the DRX cycle according to the RAN paging cycle, the CN paging cycle and the default paging cycle; and
for the second PTW overlapping in the time domain with the first PTW, within a time range excluding the first PTW, determining the DRX cycle according to the CN paging cycle and the default paging cycle.

In some embodiments, when the DRX cycle is determined based on two or three of the RAN paging cycle, the default paging cycle, and the CN paging cycle, the longer one or the longest one of the two or three of the RAN paging cycle, the default paging cycle, and the CN paging cycle may be selected as the DRX cycle with reference to the overlapping relationship between the first PTW and the second PTW in the time domain. By further determining the measurement parameters of the RRM measurement in this way, the number of times of RRM measurements can be further reduced.

In other embodiments, when the DRX cycle is determined according to two or three of the RAN paging cycle, the default paging cycle, and the CN paging cycle, the overlapping relationship between the first PTW and the second PTW in the time domain may be taken into account to select the shorter or the shortest of the two or three of the RAN paging cycle, the default paging cycle, and the CN paging cycle as the DRX cycle. By further determining the measurement parameters for the RRM measurement in this way, a better RRM measurement can be performed on the serving cell and/or the neighboring cell.

For example, according to the overlapping relationship between the first PTW and the second PTW in the time domain, there are multiple modes that determine the DRX cycle. These multiple modes are not in order, and are numbered and described separately for convenience of description below.

Mode one: for RRM measurement within the first PTW that does not overlap with the second PTW in the time domain, it is determined that the DRX cycle is the shortest one of the RAN paging cycle and the default paging cycle.

Mode two: for RRM measurement within the first PTW that overlaps with the second PTW in time domain, it is determined that the DRX cycle is the shortest one of the RAN paging cycle, the CN paging cycle and the default paging cycle;
Mode three: for a second PTW that overlaps with the first PTW in the time domain, within a time range other than the first PTW, it is determined that the DRX cycle is the shorter one of the CN paging cycle and the default paging cycle.

Any two or all three of Modes one to three may be used in combination.

The mode one for determining the DRX cycle in the embodiment of the present disclosure may be used for any of the aforementioned target PTWs. For example, if the target PTW is the first PTW, the mode one and the mode two may be used to determine the DRX cycle related to the measurement parameters for RRM measurement.

If the target PTW is the second PTW, a combination of mode two and mode three may be used to determine the DRX cycle.

When the target PTW is the third PTW, or the second PTW and the first PTW that does not overlap with the second PTW in the time domain, modes 1 to 3 may be adopted together to determine the DRX cycles in different target PTWs or the DRX cycles in different time ranges in the same target PTW. In this case, there may be multiple sets of measurement parameters for RRM measurement in the target PTW, and different sets of measurement parameters may involve differences in part or in whole with respect to their detection cycles, measurement cycles, and/or evaluation cycles.

In some embodiments, determining the DRX cycle according to the RAN paging cycle, the CN paging cycle and/or the default paging cycle includes at least one of the following:
determining the DRX cycle according to the RAN paging cycle, the CN paging cycle and the default paging cycle;
determining the DRX cycle according to the RAN paging cycle and the default paging cycle;
determining the DRX cycle according to the CN paging cycle and the default paging cycle; and
determining the DRX cycle according to the RAN paging cycle, the CN paging cycle or the default paging cycle.

In some embodiments, if the DRX cycle is determined according to two or three of the RAN paging cycle, the default paging cycle, and the CN paging cycle, the longer or the longest one of the two or three of the RAN paging cycle, the default paging cycle, and the CN paging cycle may be selected as the DRX cycle. By further determining the measurement parameters of the RRM measurement in this manner, the number of times of RRM measurements may be further reduced.

In some other embodiments, when the DRX cycle is determined according to two or three of the RAN paging cycle, the default paging cycle, and the CN paging cycle, the shorter one or the shortest of the two or three of the RAN paging cycle, the default paging cycle, and the CN paging cycle may be selected as the DRX cycle. By further determining the measurement parameters of the RRM measurement in this manner, better RRM measurement can be performed on the serving cell and/or the neighboring cell.

For example, determining the DRX cycle according to the RAN paging cycle, the CN paging cycle and/or the default paging cycle includes at least one of the following:
determining that the DRX cycle is the shortest one of the RAN paging cycle, the CN paging cycle and the default paging cycle;
determining that the DRX cycle is a shorter one of the RAN paging cycle and the default paging cycle;
determining that the DRX cycle is a shorter one of the CN paging cycle and the default paging cycle; and
determining that the DRX cycle is the RAN paging cycle, the CN paging cycle, or the default paging cycle.

In the embodiments of the present disclosure, the DRX cycles of the measurement parameters of the RRM measurements in the target PTW are the same, that is, the DRX cycles corresponding to the RRM measurements in different target PTWs or in different time ranges of the same target PTW are the same. In this way, in different target PTWs or in different time ranges of the same target PTW, the measurement parameters used for the RRM measurement may be the same, that is, the detection cycle, measurement cycle, and evaluation cycle are the same.

In some embodiments, the preset value is 20.48s.

If the first eDRX cycle and/or the second eDRX cycle is longer than or equal to 20.48s, it means that PTW is set in the first eDRX cycle and/or the second eDRX cycle. In this case, the RRM measurement can be limited to the target PTW, thereby reducing unnecessary RRM measurements, further saving power consumption generated by RRM measurements, and extending the standby time of the UE.

In some embodiments, a network device (for example, specifically an RAN) may configure an eDRX cycle in the inactive state (inactive eDRX cycle) longer than 10.24s for a UE in the inactive state. It is understood that, in some embodiments, the UE in the inactive state may receive an eDRX cycle in the inactive state and an eDRX cycle in the idle state.

The UE may perform RRM measurement requirements under the eDRX mechanism based on any of the following methods.

Method 1: for a UE in an inactive state (inactive mode) configured with an inactive eDRX cycle longer than 10.24s, the UE in the inactive mode performs RRM measurement only based on the received radio access paging cycle (RAN paging cycle).

As an embodiment, RRM measurement (serving cell and/or neighbor cell measurement) is limited to the PTW that needs to monitor the RAN paging, that is, the received CN paging cycle is ignored.

As an embodiment: RRM measurement (serving cell and/or neighboring cell measurement) is limited to the PTW in the inactive mode.

As an embodiment: the DRX cycle referenced by the RRM measurement (serving cell and/or neighboring cell measurement) is the radio access network paging cycle (RAN paging cycle).

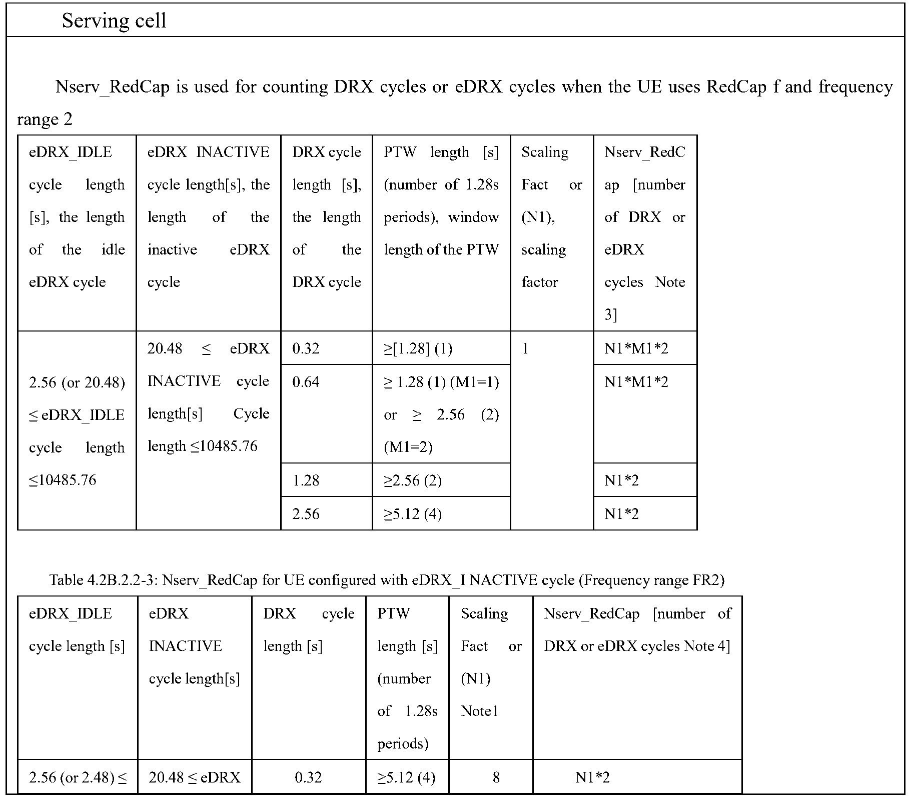

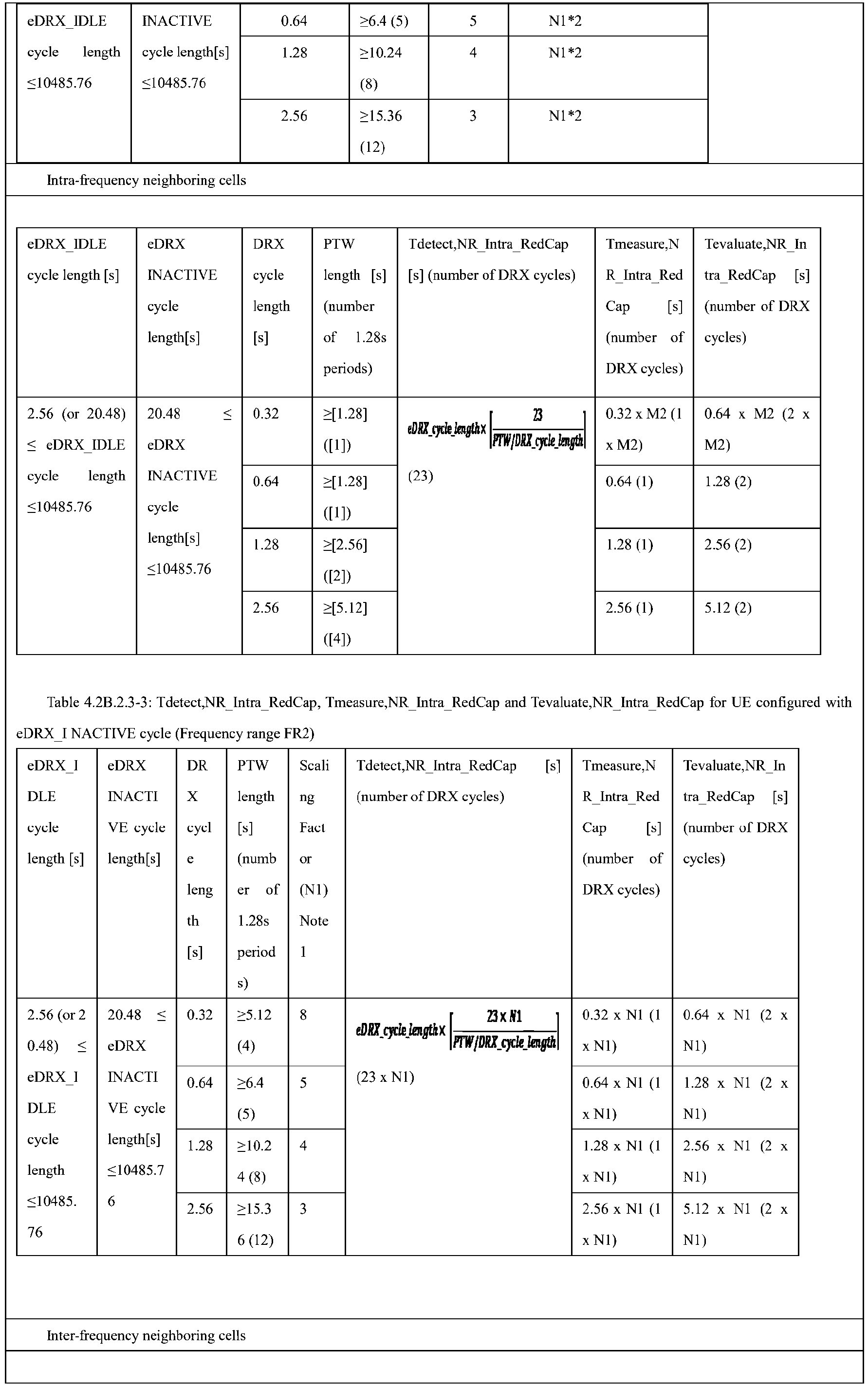

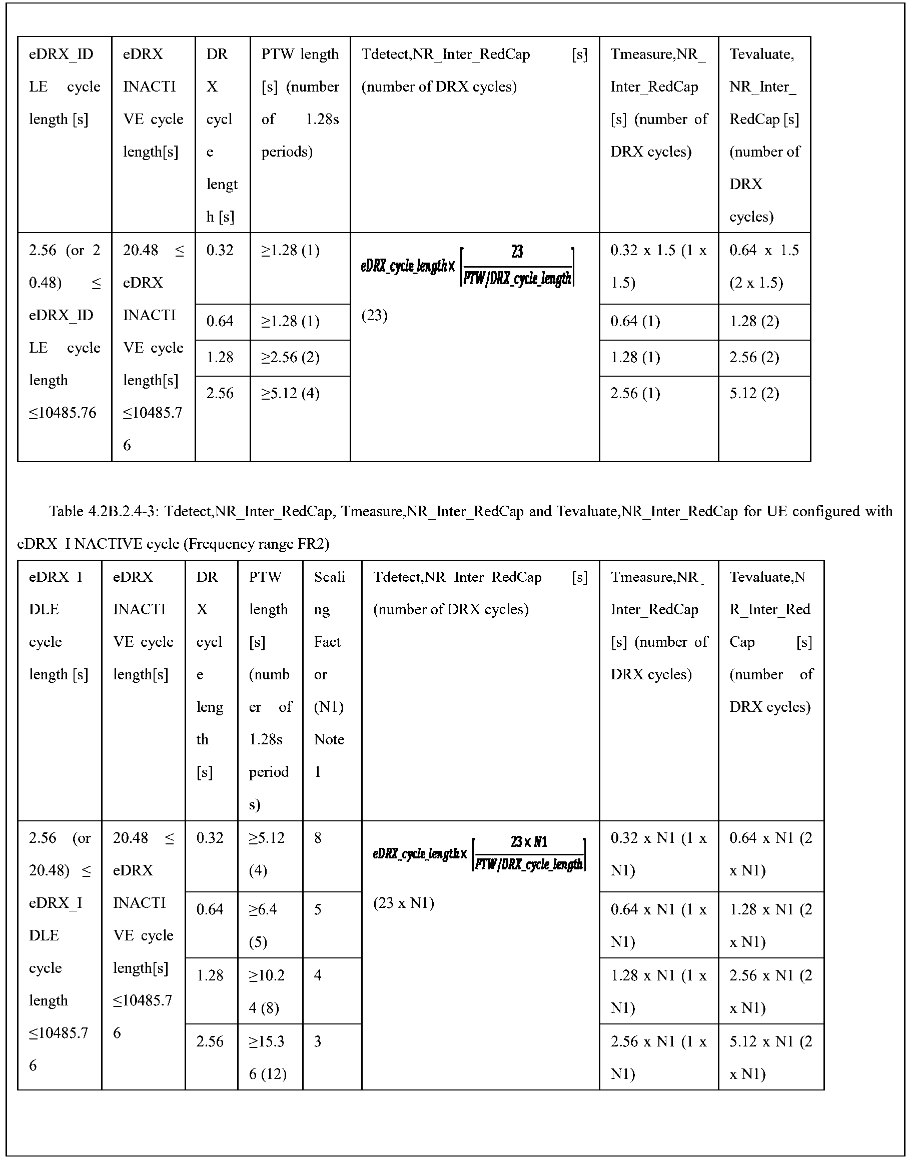

It is worth noting that the contents of each row and/or column in the above table may be implemented separately or in any combination without conflict.

In the above table, Nserv means that it functions similarly to a counter. If the UE evaluates that the serving cell does not meet the S criterion within Nserv consecutive DRX cycles, the UE may start the measurement on all neighboring cells indicated by the serving cell regardless of the current rules restricting UE measurement activities.
Tdetect: detection cycle;
Tmeasure: measurement cycle; and
Tevaluate: evaluation cycle.

Method 2: For the UE in the inactive mode, an eDRX cycle in the inactive state (inactive eDRX cycle) longer than 10.24s is configured. The inactive eDRX cycle is configured with a PTW in the inactive state, which is denoted as PTW1. And the UE in the idle mode is configured with an eDRX cycle in the idle state (idle eDRX cycle); if the idle eDRX cycle is longer than 10.24s, there is a PTW in the idle state in the idle eDRX cycle, which is recorded as PTW2. It can be understood that in some embodiments, the UE in the inactive mode can receive both the inactive eDRX cycle and the idle eDRX cycle.

As an embodiment, for a scenario where a network device configures both PTW 1 and PTW 2, the UE limits RRM measurement to PTW1 and/or PTW2. The network device may include a RAN device (or referred to as an access device) that configures PTW1. The network device may also include: a CN device (e.g., MME or AMF) that configures PTW2.

As an embodiment, for a scenario where the network configures PTW 1 and PTW 2 at the same time, the UE limits the RRM measurement to the third PTW, where the third PTW is obtained based on a combination of an eDRX parameter of the inactive mode and an eDRX parameter of the idle mode. For example, the cycle of the third PTW is determined from the eDRX cycle provided by the eDRX parameter of the inactive mode, and the window length of the third PTW is obtained from the window length provided by the eDRX parameter of the idle mode.

As an embodiment, for a scenario where the network configures PTW 1 and PTW 2 at the same time, the DRX cycle (T) for the UE to perform RRM measurement may be a cycle for the UE to monitor CN paging or a cycle for the UE to monitor RAN paging, or a cycle for the UE to monitor both the CN paging and the RAN paging.

When PTW1 and PTW2 conflict (overlap in the time domain), the window of PTW2 is used as the boundary. Within the overlap range of PTW1 and PTW2, for example, the length is PTW1 or within PTW2, that is, the period marked with cross lines in FIG. 2D, T=min{inactive DRX, idle DRX, default paging cycle}, and

As shown in FIG. 2D, outside the range where PTW1 and PTW2 overlap, in the PTW that only monitors CN paging, in the PTW2-PTW1 range, that is, in the remaining range of PTW2 except the overlapping part with PTW1, that is, the part marked with right slash on the right side of the period marked with cross lines, T=min {idle DRX, default paging cycle}. Outside the range where PTW1 and PTW2 overlap, in the PTW1 that only monitors RAN paging (outside PTW2, UE only performs measurement in PTW1, i.e. the part marked with left slash), T=min{inactive DRX}. When PTW1 and PTW2 conflict (there is overlap in the time domain), the window of PTW1 is used as the boundary.

Within PTW1 (the overlapping window), T=min{inactive mode DRX cycle, default paging cycle, idle mode DRX cycle, and outside the non-overlapping part (non-overlap part) of PTW1, UE only performs measurements within PTW1, T=min{inactive DRX}.

The idle DRX is the aforementioned CN paging cycle. The inactive DRX is the aforementioned RAN paging cycle. The default paging cycle is the aforementioned default paging cycle.

The UE performs cell selection/reselection measurement of the UE in the inactive mode based on T obtained by the above judgment.

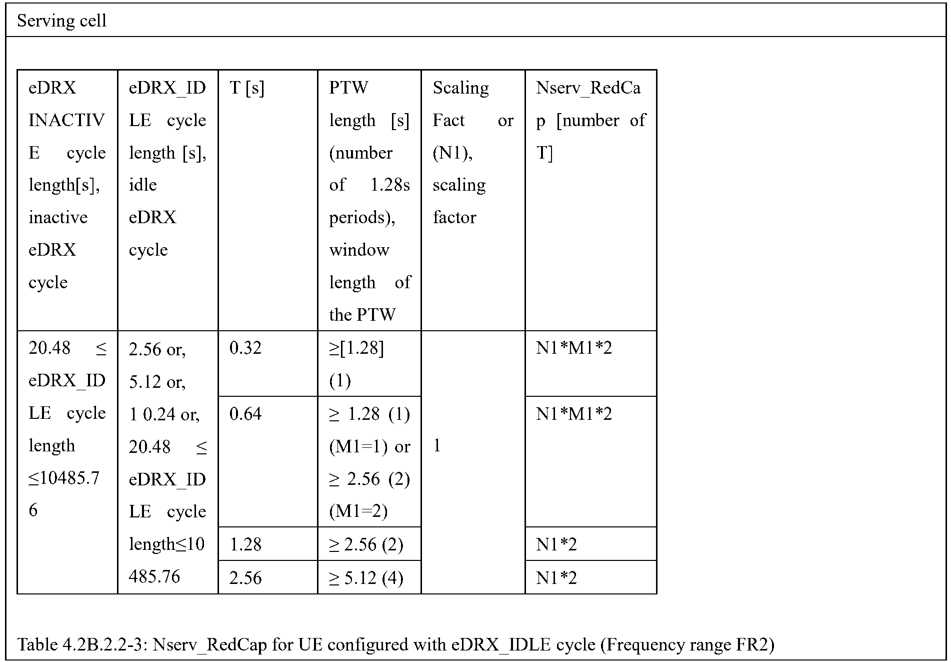

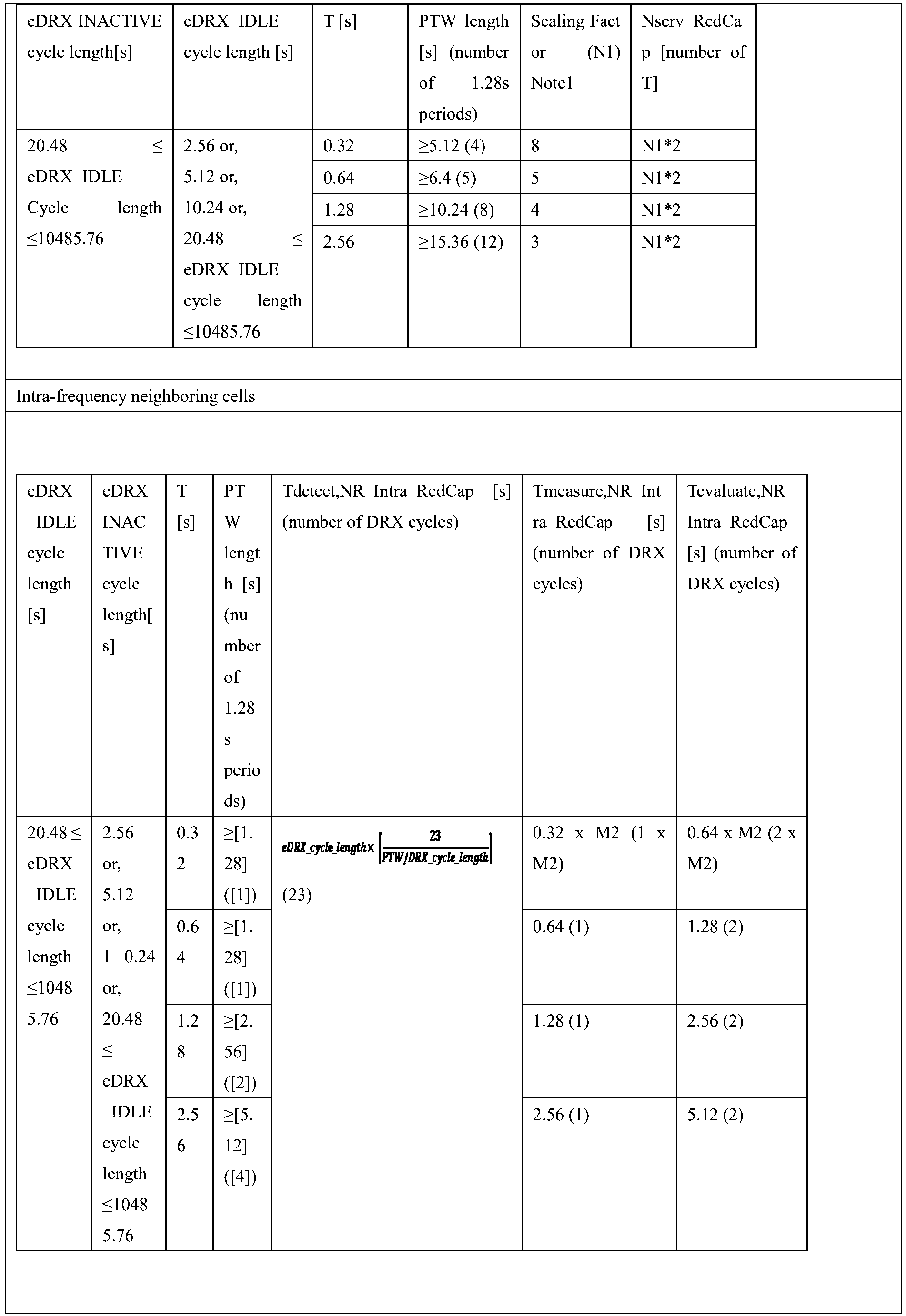

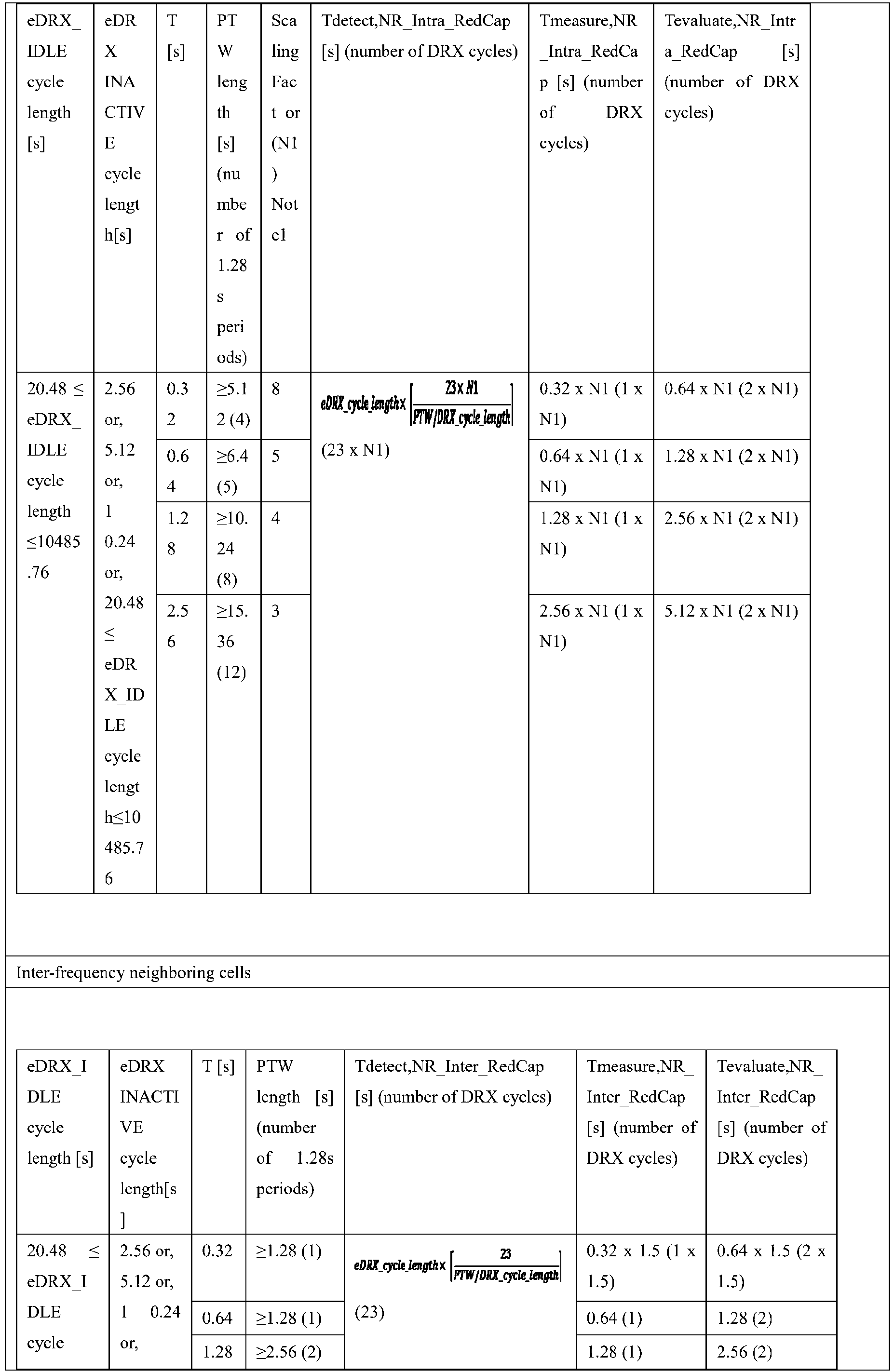

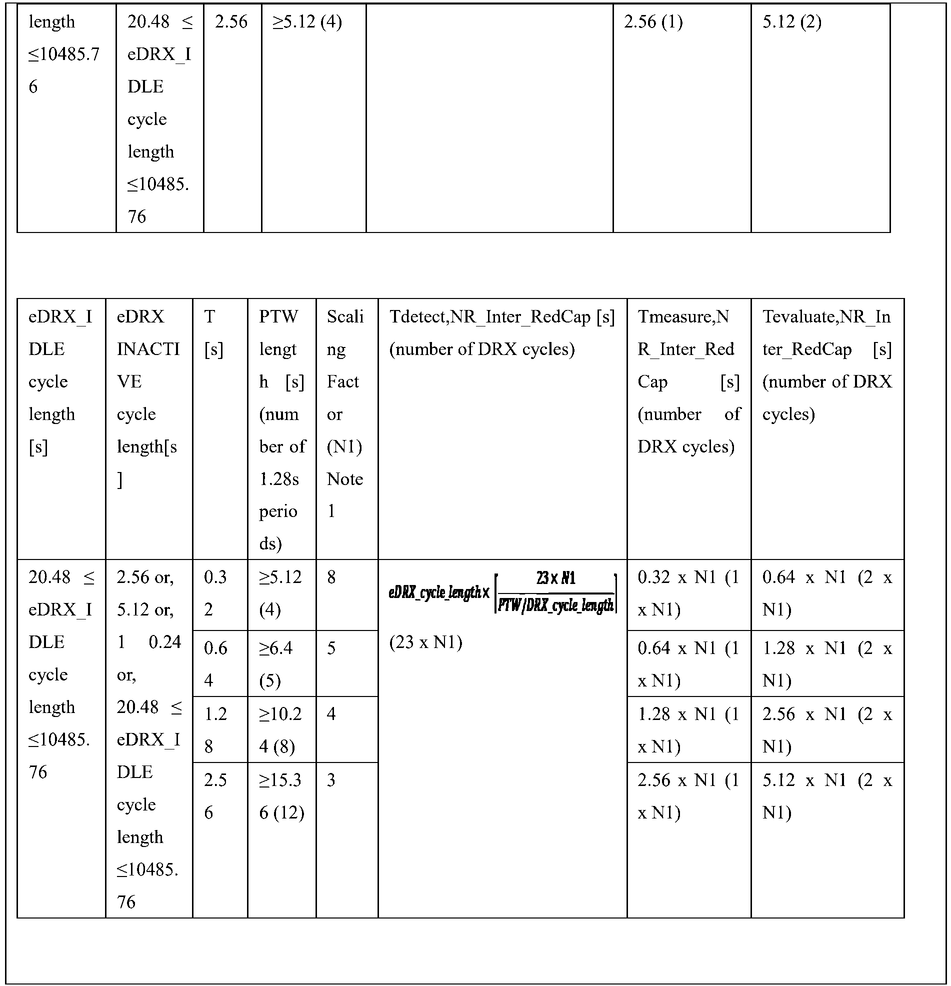

It is worth noting that the contents of each row and/or column in the above table can be implemented separately or in any combination without conflict.

In the above table, Nserv means that it functions similarly to a counter. If the UE evaluates that the serving cell does not meet the S criterion within Nserv consecutive DRX cycles, the UE may start the measurement of all neighboring cells indicated by the serving cell regardless of the current rules restricting UE measurement activities.
Tdetect means detection cycle;
Tmeasure means measurement cycle; and
Tevaluate means evaluation cycle.

It should be noted that when the UE performs RRM measurement, the measurement of the serving cell and the neighboring cell can be based on the same measurement requirement, that is, the UE uses either method 1 or method 2 to determine the measurement parameters for both the serving cell and the neighboring cells. Optionally, when the UE performs RRM measurement, that is, the measurement of the serving cell and the neighboring cell by the UE, may also be based on different measurement requirements. For example, the UE uses method 1 to determine the measurement parameters for the serving cell, and uses method 2 to determine the measurement parameters for the neighboring cell. Alternatively, the UE uses method 2 to determine the measurement parameters for the serving cell and uses method 1 to determine the measurement parameters for the neighboring cell. Alternatively, the UE uses method 1 or method 2 to determine the measurement parameters for the serving cell, and uses other methods to determine the measurement parameters for the neighboring cell. Alternatively, the UE uses method 1 or method 2 to determine the measurement parameters for the neighboring cell, and uses other methods to determine the measurement parameters for the serving cell.

As shown in FIG. 3, an embodiment of the present disclosure provides an RRM measurement apparatus, where the apparatus includes:
an execution module 110, configured to perform RRM measurement within a target PTW in response to a target eDRX cycle being longer than or equal to a preset value.

The RRM measurement device may correspond to a UE.

In some embodiments, the RRM measurement apparatus may further include a storage module, which is connected to the execution module 110 and may be used to store the preset value, etc.

In some embodiments, the execution module 110 may be a program module; after the program module is executed by a processor, the above operations can be implemented.

In other embodiments, the execution module 110 may be a software-hardware combination module; the software-hardware combination module includes, but is not limited to, various programmable arrays; the programmable arrays include, but is not limited to, a field programmable array and/or a complex programmable array.

In some other embodiments, the execution module 110 may be a pure hardware module; the pure hardware module includes, but is not limited to, a dedicated integrated circuit.

In some embodiments, the target eDRX cycle includes: a first eDRX cycle configured by an access network (RAN); and
the execution module is configured to perform the RRM measurement in the target PTW in response to the UE being in an inactive state and the first eDRX cycle being longer than or equal to the preset value.

In some embodiments, the apparatus further includes:
a first determining module, configured to determine the target PTW according to a first PTW configured by the RAN and/or a second PTW configured by a CN.

In some embodiments, the determination module is configured to perform at least one of the following:
determining that the target PTW is the second PTW;
determining, according to the first PTW and the second PTW, that the target PTW is a third PTW, where a cycle of the third PTW is the same as a cycle of the first PTW, and a window length of the third PTW is the same as a window length of the second PTW; and
determining, according to the first PTW and the second PTW, that the target PTW is the second PTW and the first PTW which does not overlap with the second PTW.

In some embodiments, the apparatus further includes:
a second determining module, configured to determine a DRX cycle according to a RAN paging cycle, a CN paging cycle and/or a default paging cycle, where the RAN paging cycle is configured by the RAN, and the CN paging cycle is configured by the CN; and
a third determination module, configured to determine a measurement parameter of the RRM measurement according to the DRX cycle.

In some embodiments, the second determination module is configured to determine the DRX cycle according to the first PTW and the second PTW, and the RAN paging cycle, the CN paging cycle and/or the default paging cycle when performing the RRM measurement in the target PTW.

In some embodiments, the second determining module is configured to perform at least one of the following:
for RRM measurement within the first PTW non-overlapping in a time domain with the second PTW, determining the DRX cycle according to the RAN paging cycle and the default paging cycle;
for RRM measurement within the first PTW overlapping in the time domain with the second PTW, determining the DRX cycle according to the RAN paging cycle, the CN paging cycle and the default paging cycle; and
for the second PTW overlapping in the time domain with the first PTW, within a time range excluding the first PTW, determining the DRX cycle according to the CN paging cycle and the default paging cycle.

In some embodiments, the second determining module is configured to perform at least one of the following:
for RRM measurement within the first PTW non-overlapping in a time domain with the second PTW, determining that the DRX cycle is a shortest one of the RAN paging cycle and the default paging cycle;
for RRM measurement within the first PTW overlapping in the time domain with the second PTW, determining that the DRX cycle is a shortest one of the RAN paging cycle, the CN paging cycle, and the default paging cycle; and
for the second PTW overlapping in the time domain with the first PTW, within a time range excluding the first PTW, determining that the DRX cycle is a shorter one of the CN paging cycle and the default paging cycle.

In some embodiments, the second determining module is configured to perform at least one of the following:
determining the DRX cycle according to the RAN paging cycle, the CN paging cycle and the default paging cycle;
determining the DRX cycle according to the RAN paging cycle and the default paging cycle;
determining the DRX cycle according to the CN paging cycle and the default paging cycle; and
determining the DRX cycle according to the RAN paging cycle, the CN paging cycle or the default paging cycle.

In some other embodiments, the second determining module is configured to perform at least one of the following:
determining that the DRX cycle is a shortest one of the RAN paging cycle, the CN paging cycle and the default paging cycle;
determining that the DRX cycle is a shorter one of the RAN paging cycle and the default paging cycle;
determining that the DRX cycle is a shorter one of the CN paging cycle and the default paging cycle; and
determining that the DRX cycle is the RAN paging cycle, the CN paging cycle, or a default paging cycle.

In some embodiments, the preset value is 20.48s.

The present disclosure provides a communication device, including:
a memory, configured to store processor-executable instructions; and
processors, respectively connected to the memory;
where the processor is configured to execute the RRM measurement method provided by any of the above technical solutions.

The processor may include various types of storage media, which are non-transitory computer storage media that can continue to retain information stored thereon after the communication device loses power.

Here, the communication device includes the UE or the network device.

The processor may be connected to the memory via a bus or the like, and may be used to read an executable program stored in the memory, for example, at least one of the methods shown in FIG. 1C, FIG. 2A to FIG. 2C, or FIG. 2E.

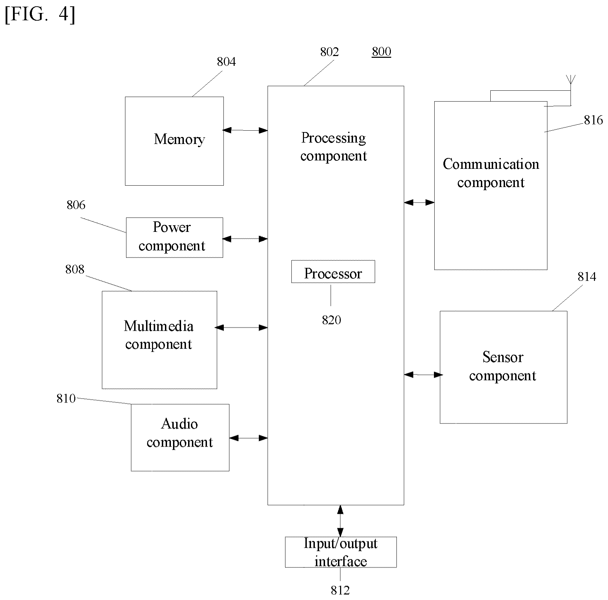

FIG. 4 is a block diagram of a UE 800 according to an exemplary embodiment. For example, the UE 800 may be a mobile phone, a computer, a digital broadcast user equipment, a messaging device, a game console, a tablet device, a medical device, a fitness device, a personal digital assistant, etc.

Referring to FIG. 4, UE 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the UE 800, such as the operations associated with display, telephone calls, data communications, camera operations, and recording operations. The processing component 802 may include one or more processors 820 to execute instructions to generate all or part of the steps in the above-described methods. Moreover, the processing component 802 may include one or more modules that facilitate the interaction between the processing component 802 and other components. For instance, the processing component 802 may include a multimedia module to facilitate the interaction between the multimedia component 3008 and the processing component 802.

The memory 804 is configured to store various types of data to support the operation of the UE 800. Examples of such data include instructions for any applications or methods operated on the UE 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the UE 800. The power component 806 may include a power management system, one or more power sources, and any other components associated with the generation, management, and distribution of power in the UE 800.

The multimedia component 808 includes a screen providing an output interface between the UE 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the UE 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the UE 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the UE 800. For instance, the sensor component 814 may detect an open/closed status of the device 800, relative positioning of components, e.g., the display and the keypad, of the UE 800, a change in position of the UE 800 or a component of the UE 800, a presence or absence of user contact with the UE 800, an orientation or an acceleration/deceleration of the UE 800, and a change in temperature of the UE 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the UE 800 and other devices. The UE 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identifier (RFID) technology, an infrared data association (IrDA) technology, an ultra-wideband (UWB) technology, a Bluetooth (BT) technology, and other technologies.

In exemplary embodiments, the UE 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above-described methods.

In an exemplary embodiment, a non-transitory computer-readable storage medium including instructions is also provided, such as a memory 804 including instructions, and the instructions can be executed by the processor 820 of the UE 800 to generate the above method, for example, at least one of the methods shown in FIG. 1C, FIGS. 2A to 2C, or FIG. 2E. For example, the non-transitory computer-readable storage medium may be a ROM, a random access memory (RAM), a CD-ROM, a magnetic tape, a floppy disk, an optical data storage device, and the like.

Other embodiments of the present disclosure will be apparent to those skilled in the art from consideration of the specification and practice of the contents disclosed here. The present disclosure is intended to cover any variations, uses, or adaptations of the embodiments of the present disclosure, which follows the general principles thereof and includes the common knowledge or habitual technical means in this technical field that is not disclosed in the present disclosure. The specification and embodiments are considered as exemplary only, with a true scope and spirit of the embodiments of the present disclosure being indicated by the following claims.

It will be appreciated that the embodiments of the present disclosure are not limited to the exact construction that has been described above and illustrated in the accompanying drawings, and various modifications and changes can be made without departing from the scope thereof. The scope of the embodiments of the present disclosure is only limited by the appended claims.

## Claims

1. A radio resource management (RRM) measurement method, wherein the method is performed by a user equipment (UE), and comprises:
in response to a target extended discontinuous reception (eDRX) cycle being longer than or equal to a preset value, performing RRM measurement within a target paging time window (PTW).

2. The method according to claim 1, wherein the target eDRX cycle comprises: a first eDRX cycle configured by an access network (RAN), and
wherein in response to the target extended discontinuous reception (eDRX) cycle being longer than or equal to the preset value, performing the RRM measurement within the target paging time window (PTW) comprises:
in response to the UE being in an inactive state and the first eDRX cycle being longer than or equal to the preset value, performing the RRM measurement within the target PTW.

3. The method according to claim 1 or 2, further comprising:
determining the target PTW according to a first PTW configured by a RAN and/or a second PTW configured by a CN.

4. The method according to claim 3, wherein determining the target PTW according to the first PTW configured by the RAN and/or the second PTW configured by the CN comprises at least one of:
determining that the target PTW is the first PTW;
determining that the target PTW is the second PTW;
determining, according to the first PTW and the second PTW, that the target PTW is a third PTW, wherein a cycle of the third PTW is the same as a cycle of the first PTW, and a window length of the third PTW is the same as a window length of the second PTW; and
determining, according to the first PTW and the second PTW, that the target PTW is the second PTW and the first PTW which does not overlap with the second PTW.

5. The method according to any one of claims 1 to 4, further comprising:
determining a DRX cycle according to a RAN paging cycle, a CN paging cycle and/or a default paging cycle, wherein the RAN paging cycle is configured by a RAN, and the CN paging cycle is configured by a CN; and
determining a measurement parameter of the RRM measurement according to the DRX cycle.

6. The method according to claim 5, wherein determining the DRX cycle according to the RAN paging cycle, the CN paging cycle and/or the default paging cycle comprises:
when performing the RRM measurement in the target PTW, determining the DRX cycle according to a first PTW and a second PTW, and the RAN paging cycle, the CN paging cycle and/or the default paging cycle.

7. The method according to claim 6, wherein determining the DRX cycle according to the first PTW and the second PTW, and the RAN paging cycle, the CN paging cycle and/or the default paging cycle comprises at least one of:
for RRM measurement within a first PTW non-overlapping in a time domain with the second PTW, determining the DRX cycle according to the RAN paging cycle and the default paging cycle;
for RRM measurement within a first PTW overlapping in a time domain with the second PTW, determining the DRX cycle according to the RAN paging cycle, the CN paging cycle and the default paging cycle; and
for a second PTW overlapping in a time domain with the first PTW, within a time range excluding the first PTW, determining the DRX cycle according to the CN paging cycle and the default paging cycle.

8. The method according to claim 6 or 7, wherein determining the DRX cycle according to the first PTW and the second PTW, and the RAN paging cycle, the CN paging cycle and/or the default paging cycle comprises at least one of:
for RRM measurement within a first PTW non-overlapping in a time domain with the second PTW, determining that the DRX cycle is a shortest one of the RAN paging cycle and the default paging cycle;
for RRM measurement within a first PTW overlapping in a time domain with the second PTW, determining that the DRX cycle is a shortest one of the RAN paging cycle, the CN paging cycle, and the default paging cycle; and
for a second PTW overlapping in a time domain with the first PTW, within a time range excluding the first PTW, determining that the DRX cycle is a shorter one of the CN paging cycle and the default paging cycle.

9. The method according to claim 5, wherein determining the DRX cycle according to the RAN paging cycle, the CN paging cycle and/or the default paging cycle comprises at least one of:
determining the DRX cycle according to the RAN paging cycle, the CN paging cycle and the default paging cycle;
determining the DRX cycle according to the RAN paging cycle and the default paging cycle;
determining the DRX cycle according to the CN paging cycle and the default paging cycle; and
determining the DRX cycle according to the RAN paging cycle, the CN paging cycle or the default paging cycle.

10. The method according to claim 5 or 9, wherein determining the DRX cycle according to the RAN paging cycle, the CN paging cycle and/or the default paging cycle comprises at least one of:
determining that the DRX cycle is a shortest one of the RAN paging cycle, the CN paging cycle and the default paging cycle;
determining that the DRX cycle is a shorter one of the RAN paging cycle and the default paging cycle;
determining that the DRX cycle is a shorter one of the CN paging cycle and the default paging cycle; and
determining that the DRX cycle is the RAN paging cycle, the CN paging cycle, or the default paging cycle.

11. The method according to any one of claims 1 to 10, wherein the preset value is 20.48s.

12. A radio resource management (RRM) measurement apparatus, comprising:
an execution module, configured to perform RRM measurement within a target paging time window (PTW) in response to a target extended discontinuous reception (eDRX) cycle being longer than or equal to a preset value.

13. The apparatus according to claim 12, wherein the target eDRX cycle comprises: a first eDRX cycle configured by an access network (RAN), and the execution module is further configured to:
perform the RRM measurement within the target PTW in response to a UE being in an inactive state and the first eDRX cycle being longer than or equal to the preset value.

14. The apparatus according to claim 13, further comprising:
a first determining module, configured to determine the target PTW according to a first PTW configured by a RAN and/or a second PTW configured by a CN.

15. The apparatus according to claim 14, wherein the first determining module is configured to perform at least one of:
determining that the target PTW is the first PTW;
determining that the target PTW is the second PTW;
determining, according to the first PTW and the second PTW, that the target PTW is a third PTW, wherein a cycle of the third PTW is the same as a cycle of the first PTW, and a window length of the third PTW is the same as a window length of the second PTW; and
determining, according to the first PTW and the second PTW, that the target PTW is the second PTW and the first PTW which does not overlap with the second PTW.

16. The apparatus according to any one of claims 13 to 15, further comprising:
a second determining module, configured to determine a DRX cycle according to a RAN paging cycle, a CN paging cycle and/or a default paging cycle, wherein the RAN paging cycle is configured by the RAN, and the CN paging cycle is configured by a CN; and
a third determination module, configured to determine a measurement parameter of the RRM measurement according to the DRX cycle.

17. The apparatus according to claim 16, wherein the second determining module is configured to determine the DRX cycle according to a first PTW and a second PTW, and the RAN paging cycle, the CN paging cycle and/or the default paging cycle when performing the RRM measurement in the target PTW.

18. The apparatus according to claim 17, wherein the second determining module is configured to perform at least one of:
for RRM measurement within a first PTW non-overlapping in a time domain with the second PTW, determining the DRX cycle according to the RAN paging cycle and the default paging cycle;
for RRM measurement within a first PTW overlapping in a time domain with the second PTW, determining the DRX cycle according to the RAN paging cycle, the CN paging cycle and the default paging cycle; and
for a second PTW overlapping in a time domain with the first PTW, within a time range excluding the first PTW, determining the DRX cycle according to the CN paging cycle and the default paging cycle.

19. The apparatus according to claim 17 or 18, wherein the second determining module is configured to perform at least one of:
for RRM measurement within a first PTW non-overlapping in a time domain with the second PTW, determining that the DRX cycle is a shortest one of the RAN paging cycle and the default paging cycle;
for RRM measurement within a first PTW overlapping in a time domain with the second PTW, determining that the DRX cycle is a shortest one of the RAN paging cycle, the CN paging cycle, and the default paging cycle; and
for a second PTW overlapping in a time domain with the first PTW, within a time range excluding the first PTW, determining that the DRX cycle is a shorter one of the CN paging cycle and the default paging cycle.

20. The apparatus according to claim 16, wherein the second determining module is configured to perform at least one of:
determining the DRX cycle according to the RAN paging cycle, the CN paging cycle and the default paging cycle;
determining the DRX cycle according to the RAN paging cycle and the default paging cycle;
determining the DRX cycle according to the CN paging cycle and the default paging cycle; and
determining the DRX cycle according to the RAN paging cycle, the CN paging cycle or the default paging cycle.

21. The apparatus according to claim 16 or 20, wherein the second determining module is configured to perform at least one of:
determining that the DRX cycle is a shortest one of the RAN paging cycle, the CN paging cycle and the default paging cycle;
determining that the DRX cycle is a shorter one of the RAN paging cycle and the default paging cycle;
determining that the DRX cycle is a shorter one of the CN paging cycle and the default paging cycle; and
determining that the DRX cycle is the RAN paging cycle, the CN paging cycle, or the default paging cycle.

22. The apparatus according to any one of claims 12 to 21, wherein the preset value is 20.48s.

23. A communication device, comprising a processor, a transceiver, a memory, and an executable program stored in the memory and capable of being run by the processor, wherein the processor, when running the executable program, executes the method according to any one of claims 1 to 11.

24. A computer storage medium storing an executable program, wherein the executable program, when being executed by a processor, is able to implement the method according to any one of claims 1 to 11.
